# EUROPÄISCHE PATENTSCHRIFT

(11) **EP 4 007 857 B1**
(45) Veröffentlichungstag und Bekanntmachung des Hinweises auf die Patenterteilung: **27.09.2023**
(21) Anmeldenummer: 20756745.4
(22) Anmeldetag: 04.08.2020
(51) Int. Cl.: F16B 37/00, F16B 31/02

(54) **SCHRAUBENMUTTER**
SCREW NUT
ÉCROU À VIS

(30) Priorität: 04.08.2019 AT 601822019
(43) Veröffentlichungstag der Anmeldung: 08.06.2022
(73) Patentinhaber: Revotec ZT GmbH, 1030 Wien (AT)
(72) Erfinder: REITERER, Michael, 1030 Wien (AT); GULYAS, Gergely, 1070 Wien (AT)
(74) Vertreter: Puchberger & Partner Patentanwälte
(86) Internationale Anmeldenummer: PCT/AT2020/060288
(87) Internationale Veröffentlichungsnummer: WO 2021/022311

(56) Entgegenhaltungen:
- CN-A- 108 071 649
- DE-A1-102011 005 371
- JP-B2- 4 199 586
- US-B1- 7 278 341

## Beschreibung

Die Erfindung betrifft eine intelligente Schraubenmutter die an den Seitenflächen mit Sensoren in Schraubenachse (2) und/oder Sensoren quer zur Schraubenachse (3) ausgestattet wird. Als Alternative zur intelligenten Schraubenmutter können die Sensoren auch an die Seitenflächen einer gewöhnlichen Schraube (am Schraubenkopf) fixiert werden. Zusätzlich wird ein RFID-Transponder (auch genannt RFID-Tag) (5) und/oder ein Mikrocontroller (5) an den Seitenflächen der intelligenten Schraubenmutter angebracht. Im Fall der RFID-Transponder Ausführung handelt sich vorzugsweise um passive RFID-Tags (5) die keine eigene Stromversorgung benötigen.

Mit der intelligenten Mutter ist eine Überprüfung der Größe der Vorspannkraft im Gewindebolzen (7) oder in einer Schraube (7), auf dem die intelligente Mutter aufgeschraubt wird, möglich.

Die vorliegende Erfindung betrifft eine intelligente Schraubenmutter, die auf einen Gewindestab aufgeschraubt wird, mit den Merkmalen des unabhängigen Patentanspruchs,

Schraubenmuttern werden im Stand der Technik üblicherweise in Kombination mit einer Schraube oder einem Gewindebolzen zum Verbinden von zwei oder mehr Elementen eingesetzt. Beim Anziehen der Schraube oder Mutter kommt es zu einer Stauchung der Schraubenmutter und diese Stauchung wird mit der vorliegenden Erfindung messtechnisch direkt an der Schraubenmutter ermittelt.

Aus der DE 10 2011 005371 A1 ist eine Vorrichtung zur Überwachung einer Integrität einer Schraubverbindung bekannt.

Die Erfindung betrifft insbesondere eine intelligente Schraubenmutter (1) die an den Seitenflächen mit Sensoren (2) in Schraubenachse (4) und Sensoren (3) quer zur Schraubenachse (4) ausgestattet wird. Als Sensortyp kommen erfindungsgemäß (2 und 3) zum Einsatz, welche an die Seitenflächen der Schraubenmuttern fixiert sind. Die Dehnmessstreifen werden mit einem Kleber oder mittels Schweißverbindung auf die Seitenflächen fixiert. Die Fixierung erfolgt vorzugsweise zentrisch, d.h. in der halben Höhe und halben Breite der Schraubenmutterseitenfläche. Zusätzlich wird an den Seitenflächen ein RFID-Transponder (5) oder ein Mikrocontroller (5) fixiert. Die Sensoren werden mit dem RFID-Transponder oder mit dem Mikrocontroller mittels Sensorleitungen (6) verbunden. Beim Anziehen der intelligenten Schraubmutter (1) kommt es zu einer Materialstauchung der Mutter und die Größe dieser Stauchung wird von den Sensoren gemessen. Zwischen der Größe der Stauchung und der Vorspannkraft im Gewindebolzen oder in der Schraube existiert eine funktionale mathematische Beziehung und der gemessene Wert der Stauchung wird in eine äquivalente Vorspannkraft umgerechnet. Mit einem RFID-Lesegerät oder über einen Kabelanschluss wird die aktuelle Größe der Schraubenmutterstauchung bzw. der Vorspannkraft im Gewindebolzen oder in der Schraube abgefragt.

Mit der Erfindung ergibt sich die Möglichkeit, alle Konstruktionen bei denen Befestigungselemente mit Schraubenmuttern ausgeführt werden, messtechnisch in Bezug auf die Größe der aktuell vorhandenen Vorspannkraft im Gewindebolzen oder in der Schraube zu ermittelt bzw. zu überprüfen. Es handelt sich daher um eine radikale Innovation.

Erfindungsgemäß wird eine intelligente Schraubenmutter bereitgestellt, wobei die Schraubenmutter mit Sensoren an den Seitenflächen der Schraubenmutter ausgestattet ist.

Gegebenenfalls ist vorgesehen, dass die Schraubenmutter mit einem RFID-Transponder (5) oder mit einem Mikrokontroller ausgestattet ist.

Gegebenenfalls ist vorgesehen, dass die fixierten Sensoren in Schraubenachse (4) und quer zur Schraubenachse ausgerichtet werden.

Gegebenenfalls ist vorgesehen, dass der RFID-Transponder oder der Mikrokontroller mit einem Sensorkabel mit den Sensoren verbunden wird.

Gegebenenfalls ist vorgesehen, dass der RFID-Transponder (5) oder der Mikrokontroller an jeder beliebigen und/oder an mehreren Seitenflächen der intelligenten Schraubenmutter fixiert wird.

Gegebenenfalls ist vorgesehen, dass die Sensormesssignale von einer Seitenfläche zu einer beliebigen anderen Seitenfläche der Schraubenmutter mit Sensorkabel übertragen werden.

Gegebenenfalls ist vorgesehen, dass die Sensormesssignale von einer Seitenfläche zu einer beliebigen anderen Seitenfläche der Schraubenmutter mittels Funktechnologie übertragen werden.

Gegebenenfalls ist vorgesehen, dass die Sensoren und an die Seitenfläche geklebt oder geschweißt werden.

Erfindungsgemäß sind Dehnmesstreifen als Sensoren vorgesehen, die die Stauchung der intelligenten Schraubenmutter messen und an die Seitenflächen fixiert werden.

Gegebenenfalls ist vorgesehen, dass der RFID-Transponder einen Analog-Digital-Wandler und einen Verstärker umfasst.

Gegebenenfalls ist vorgesehen, dass der RFID-Transponder ein passiver RFID-Transponder ist.

Gegebenenfalls ist vorgesehen, dass die Schraubenmutter (1) zusätzlich einen Temperatursensor umfasst.

Gegebenenfalls ist vorgesehen, dass der Temperatursensor dazu ausgebildet ist, die Temperatur der Schraubenmutter zu messen.

Gegebenenfalls ist vorgesehen, dass der RFID-Transponder (5) oder der Mikrokontroller (5) dazu ausgebildet ist, Messsignale der Sensoren kabellos an eine Empfängereinrichtung zu übertragen.

Weitere Merkmale der Erfindung ergeben sich aus der nachfolgenden Beschreibung, den Figuren sowie den Patentansprüchen.

Die Erfindung betrifft eine Schraubenmutter. Eine Schraubenmutter weist üblicherweise eine Schraubenrichtung bzw. eine Schraubrichtung auf, entlang derer die Schraubenmutter auf ein Gewinde eines Gewindebolzens und dergleichen geschraubt werden kann. Gleichermaßen weist eine Schraube üblicherweise eine Schraubenrichtung bzw. eine Schraubrichtung auf, entlang derer die Schraube in ein Innengewinde, eine Freistellung oder in einen anderen Gegenstand oder ein Element geschraubt oder geführt werden kann.

Beim Festziehen des Befestigungselements treten unter anderem Kräfte in Schraubenrichtung oder in Schraubrichtung auf. Diese Kräfte bestehen insbesondere in einer Zugspannung entlang der Schraubenrichtung bzw. der Schraubrichtung. Im Rahmen der vorliegenden Erfindung wurde festgestellt, dass die Zugspannung gleichzeitig eine Stauchung eines Teils des Befestigungselements bewirkt. Es wurde gefunden, dass diese Stauchung zur Zugspannung proportional ist und daher für die Bestimmung der Zugspannung herangezogen werden kann.

Die Stauchung wird durch Dehnungsmess-Sensoren in Form von Dehnmessstreifen bestimmt, deren Messrichtung im Wesentlichen parallel zur Schraubrichtung bzw. zur Schraubenrichtung angeordnet ist. Bevorzugt sind mehrere Sensoren mit gleicher Messrichtung am Befestigungselement angeordnet. Dadurch können Variationen der Messwerte durch Bildung eines Mittelwerts ausgeglichen werden.

Die Auslesung der Messwerte erfolgt bevorzugt kabellos, insbesondere über einen RFID-Transponder oder einen Mikrokontroller. Der RFID-Transponder kann ein RFID-Sensor-Transponder sein. Der RFID-Transponder kann ein passiver RFID-Transponder sein. Der RFID-Transponder kann einen Analog-Digital-Wandler und einen Verstärker umfassen. Die Auslesung der Messwerte kann alternativ jedoch auch kabelgebunden über einen Kabelanschluss erfolgen.

Ein passiver RFID-Transponder mit Analog-Digital-Wandler und Verstärker bietet den Vorteil, dass am Befestigungselement keine Stromversorgung notwendig ist. Die notwendige Energie zum Auslesen eines Messwerts kann beispielsweise durch ein Lesegerät bereitgestellt werden. Dadurch werden mögliche technische Probleme aufgrund mangelnder Stromversorgung minimiert. Zudem kann das Befestigungselement an Orten eingesetzt werden, die keine durchgehende Stromversorgung ermöglichen.

Gegebenenfalls kann zusätzlich zum Dehnungsmess-Sensor ein Temperatursensor vorgesehen sein, um die Materialtemperatur des Befestigungselements zu messen. Messfehler, die sich aus einer temperaturbedingten Dehnung oder Stauchung des Befestigungselements ergeben könnten, können dadurch ausgeglichen werden. Insbesondere kann der Messwert des Dehnungsmess-Sensors um den Faktor der temperaturbedingten Dehnung bzw. Stauchung des Befestigungselements korrigiert werden. Die temperaturbedingte Dehnung bzw. Stauchung des Befestigungselements ist abhängig von Materialparametern, wie beispielsweise dem Ausdehnungskoeffizienten. Diese Materialparameter können von einem Fachmann empirisch bestimmt werden.

Wenn das Befestigungselement mehrere Sensoren umfasst, können diese über einen Sensordraht oder über mehrere Sensordrähte miteinander verbunden sein. Dadurch können die Messwerte mehrerer Sensoren über ein Sendeelement, beispielsweise einen RFID-Transponder, ausgelesen werden. Die Signalübertagung zwischen mehreren Sensoren kann auch kabellos, beispielsweise mittels eine Funkeinrichtung, erfolgen.

Nachfolgend wird die vorliegende Erfindung anhand exemplarischer Beispiele im Detail erläutert.

Es zeigen:
Fig. 1-4 schematische Ansichten einer erfindungsgemäßen Schraubenmutter gemäß einem ersten Beispiel in unterschiedlichen Projektionsansichten;
Fig. 5 und 6 schematische Ansichten einer erfindungsgemäßen Schraubenmutter gemäß einem zweiten Beispiel;
Fig. 7 eine schematische perspektivische Ansicht einer erfindungsgemäßen Schraubenmutter gemäß einem dritten Beispiel;
Fig. 8 und 9 schematische Ansichten einer erfindungsgemäßen Schraubenmutter gemäß einem vierten Beispiel in unterschiedlichen Projektionsansichten;
Fig. 10 eine schematische Aufsicht einer erfindungsgemäßen Schraubenmutter gemäß einem fünften Beispiel.

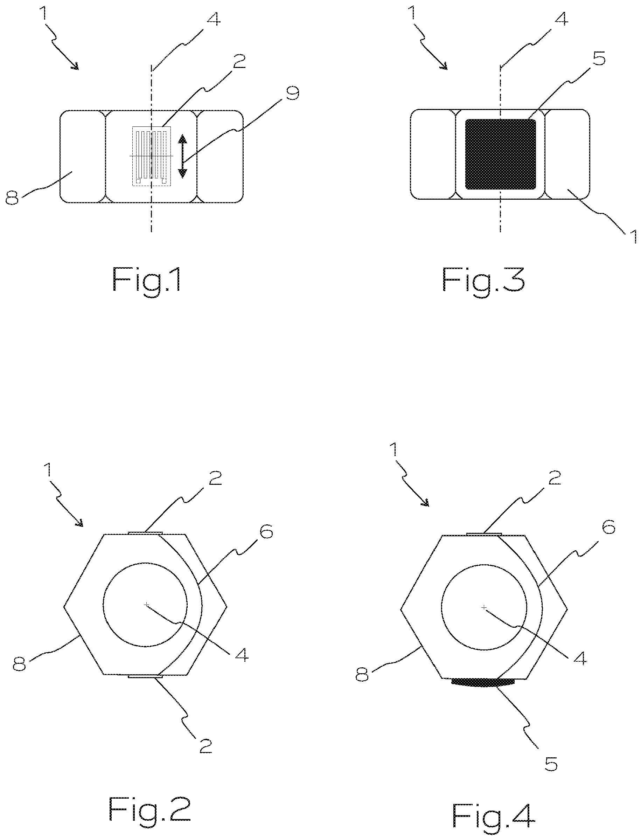

Die Fig. 1-4 zeigen schematische Ansichten einer erfindungsgemäßen Schraubenmutter 1 gemäß einem ersten Beispiel in unterschiedlichen Projektionsansichten, in seitlicher Ansicht (Fig. 1 und 3) sowie in Aufsicht von oben und unten (Fig. 2 und 4).

Die Schraubenmutter 1 umfasst zwei an gegenüberliegenden Seitenflächen 8 der Schraubenmutter 1 angeordnete Sensoren 2, die als Dehnmessstreifen ausgeführt sind. Die Messrichtung 9 der Dehnmessstreifen verläuft im Wesentlichen parallel zur Schraubachse bzw. zur Schraubenachse 4 der Mutter 1, die im Wesentlichen durch die Ausrichtung des innenliegenden Gewindes der Mutter 1 definiert wird.

Die beiden Sensoren 2 sind über Sensorkabel miteinander verbunden, sodass ein Auslesen des Messsignals über ein einziges Sendeelement möglich ist. Das Sendeelement ist als passiver RFID-Transponder 5 mit einem Analog-Digital-Wandler und einem Verstärker ausgeführt. Dadurch erfordert die Messanordnung keine dauerhafte Stromversorgung, sondern die zur Messung und zum Auslesen des Messwerts benötigte Energie wird von einem externen Auslesegerät (nicht gezeigt) zugeführt.

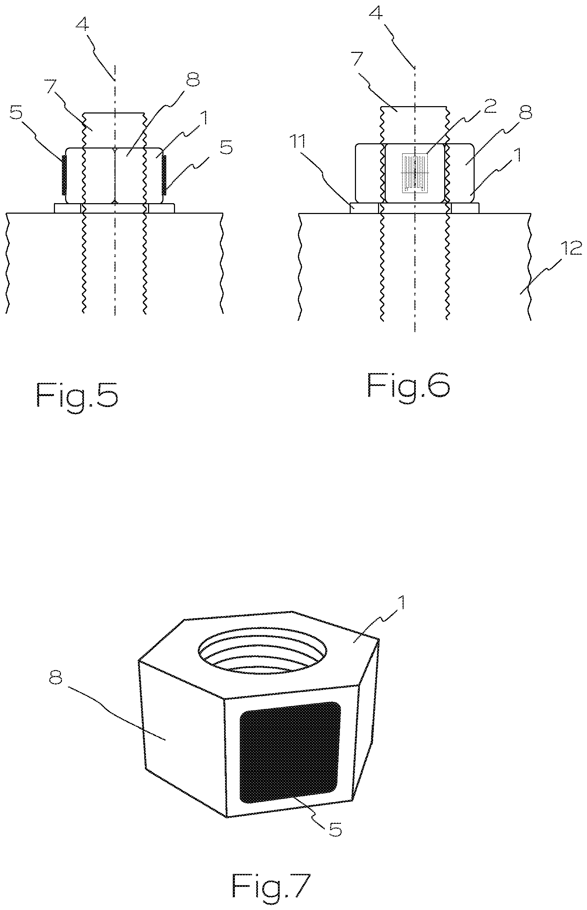

Fig. 5 und 6 zeigen schematische Ansichten einer erfindungsgemäßen Schraubenmutter 1 gemäß einem zweiten Beispiel. Die Schraubenmutter 1 ist auf einen Gewindebolzen 7 geschraubt und drückt über eine Beilagscheibe 11 gegen ein zu befestigendes Element 12. Die Stauchung der Mutter 1 ist umgekehrt proportional zur Spannkraft. Im Gegensatz zum ersten Beispiel umfasst diese Schraubenmutter 1 nur einen Sensor 2 und zwei RFID-Transponder 5.

Fig. 7 zeigt eine schematische perspektivische Ansicht einer erfindungsgemäßen Schraubenmutter 1 gemäß einem dritten Beispiel. An einer Seitenfläche 8 ist ein RFID-Transponder 5 angeordnet, der Sensor 2 ist nicht gezeigt.

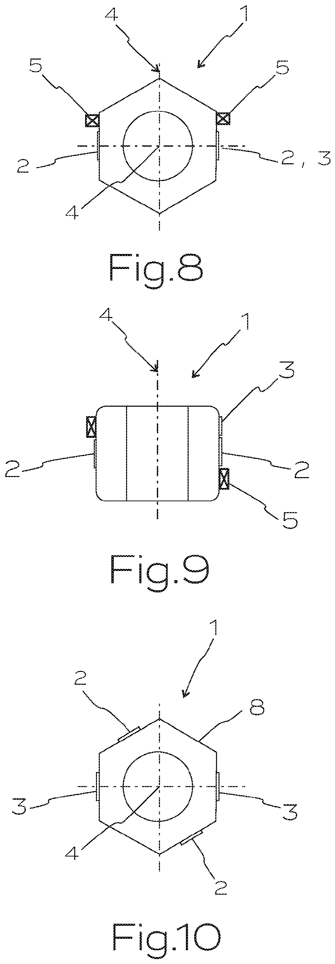

Fig. 8 und 9 zeigen schematische Ansichten einer erfindungsgemäßen Schraubenmutter 1 gemäß einem vierten Beispiel in Aufsicht (Fig. 8) sowie in seitlicher Ansicht (Fig. 9).

Die Schraubenmutter 1 umfasst zwei an gegenüberliegenden Seitenflächen 8 der Schraubenmutter 1 angeordnete Sensoren 2, die als Dehnmessstreifen ausgeführt sind. Ferner ist an einer Seitenfläche 8 mit einem Sensor 2 ein weiterer Sensor 3 vorgesehen, der als Dehnmessstreifen ausgeführt ist. Die Messrichtung 9 der Sensoren 2 verläuft im Wesentlichen parallel zur Schraubachse bzw. zur Schraubenachse 4 der Mutter 1, während die Messrichtung 9 des Sensors 3 im Wesentlichen quer bzw. orthogonal zur Schraubachse bzw. zur Schraubenachse 4 der Mutter 1 verläuft.

Zur Übertragung der Messwerte sind zwei RFID-Transponder 5 vorgesehen. Der Sensor 3 dient unter anderem der Feststellung von Dehnungen und Stauchungen der Schraubenmutter 1, die nicht durch eine Änderung der Spannkraft bedingt werden, sondern beispielsweise durch Temperaturschwankungen.

In einem nicht dargestellten Beispiel kann der Sensor 3 durch einen Temperatursensor ersetzt werden, um Temperaturschwankungen feststellen und die daraus resultierende Dehnung bzw. Stauchung der Schraubenmutter 1 bestimmen zu können.

Fig. 10 zeigt eine schematische Aufsicht einer erfindungsgemäßen Schraubenmutter 1 gemäß einem fünften Beispiel. Hier sind zwei Sensoren 2 vorgesehen, die als Dehnmessstreifen ausgeführt sind und deren Messrichtung parallel zur Schraubenachse 4 verläuft. Ferner sind zwei Sensoren 3 vorgesehen, die als Dehnmessstreifen ausgeführt sind und deren Messrichtung orthogonal zur Schraubenachse 4 verläuft. RFID-Transponder 5 und andere Elemente sind zur Vereinfachung nicht dargestellt.

### Bezugszeichenliste

- 1: Schraubenmutter
- 2: Sensor
- 3: Sensor
- 4: Schraubenachse
- 5: RFID-Transponder / Mikrocontroller
- 6: Sensorleitung
- 7: Gewindebolzen / Schraube
- 8: Seitenfläche
- 9: Messrichtung
- 10: Schraube
- 11: Beilagscheibe
- 12: Element

## Patentansprüche

1. Intelligente Schraubenmutter (1), wobei die Schraubenmutter (1) mit Sensoren (2) und (3) an den Seitenflächen (8) der Schraubenmutter (1) ausgestattet ist, wobei (2 und 3) als Sensoren vorgesehen sind, die zur Messung der Stauchung der Schraubenmutter (1) eingerichtet sind, und die an den Seitenflächen (8) der Schraubenmutter (1) fixiert sind.

2. Intelligente Schraubenmutter (1) nach Anspruch 1 **dadurch gekennzeichnet, dass** die Schraubenmutter mit einem RFID-Transponder (5) oder mit einem Mikrokontroller (5) ausgestattet ist.

3. Intelligente Schraubenmutter (1) nach einem der vorstehenden Ansprüche, **dadurch gekennzeichnet, dass** die fixierten Sensoren in Schraubenachse (4) und/oder quer zur Schraubenachse (4) ausgerichtet sind.

4. Intelligente Schraubenmutter (1) nach einem der vorstehenden Ansprüche, **dadurch gekennzeichnet, dass** der RFID-Transponder (5) oder der Mikrokontroller (5) mit einem Sensorkabel mit den Sensoren verbunden ist.

5. Intelligente Schraubenmutter (1) nach einem der vorstehenden Ansprüche, **dadurch gekennzeichnet, dass** der RFID-Transponder (5) oder der Mikrokontroller (5) an jeder beliebigen und/oder an mehreren Seitenflächen der intelligenten Schraubenmutter fixiert ist.

6. Intelligente Schraubenmutter (1) nach einem der vorstehenden Ansprüche, **dadurch gekennzeichnet, dass** die Sensormesssignale von einer Seitenfläche zu einer beliebigen anderen Seitenfläche der Schraubenmutter mit Sensorkabel übertragen werden.

7. Intelligente Schraubenmutter (1) nach einem der vorstehenden Ansprüche, **dadurch gekennzeichnet, dass** die Sensormesssignale von einer Seitenfläche zu einer beliebigen anderen Seitenfläche der Schraubenmutter mittels Funktechnologie übertragen werden.

8. Intelligente Schraubenmutter (1) nach einem der vorstehenden Ansprüche, **dadurch gekennzeichnet, dass** die Sensoren (2) und (3) an die Seitenfläche geklebt oder geschweißt sind.

9. Intelligente Schraubenmutter nach einem der vorstehenden Ansprüche, **dadurch gekennzeichnet, dass** der RFID-Transponder einen Analog-Digital-Wandler und einen Verstärker umfasst.

10. Intelligente Schraubenmutter nach einem der vorstehenden Ansprüche, **dadurch gekennzeichnet, dass** der RFID-Transponder ein passiver RFID-Transponder ist.

11. Intelligente Schraubenmutter nach einem der vorstehenden Ansprüche, **dadurch gekennzeichnet, dass** die Schraubenmutter (1) zusätzlich einen Temperatursensor umfasst.

12. Intelligente Schraubenmutter nach Anspruch 11, **dadurch gekennzeichnet, dass** der Temperatursensor dazu ausgebildet ist, die Temperatur der Schraubenmutter zu messen.

13. Intelligente Schraubenmutter nach einem der Ansprüche 2 bis 12, **dadurch gekennzeichnet, dass** der RFID-Transponder (5) oder der Mikrokontroller (5) dazu ausgebildet ist, Messsignale der Sensoren kabellos an eine Empfängereinrichtung zu übertragen.

## Claims

1. An intelligent screw nut (1), the screw nut (1) being equipped with sensors (2) and (3) on the lateral surfaces (8) of the screw nut (1),
wherein strain gauges (2) and (3) are provided as sensors that are configured to measure the compression of the screw nut (1) and are fixed to the lateral surfaces (8) of the screw nut (1).

2. The intelligent screw nut (1) according to claim 1, **characterised in that** the screw nut is equipped with an RFID transponder (5) or a micro-controller (5).

3. The intelligent screw nut (1) according to one of the preceding claims, **characterised in that** the fixed sensors are oriented in the direction of the screw axis (4) and/or transversely to the screw axis (4).

4. The intelligent screw nut (1) according to one of the preceding claims, **characterised in that** the RFID transponder (5) or the micro-controller (5) is connected to the sensors by means of a sensor cable.

5. The intelligent screw nut (1) according to one of the preceding claims, **characterised in that** the RFID transponder (5) or the micro-controller (5) is fixed to any and/or multiple lateral surface(s) of the intelligent screw nut.

6. The intelligent screw nut (1) according to one of the preceding claims, **characterised in that** the sensor measurement signals are transmitted from one lateral surface to any other lateral surface of the screw nut by means of a sensor cable.

7. The intelligent screw nut (1) according to one of the preceding claims, **characterised in that** the sensor measurement signals are transmitted from one lateral surface to any other lateral surface of the screw nut by means of radio technology.

8. The intelligent screw nut (1) according to one of the preceding claims, **characterised in that** the sensors (2) and (3) are glued or welded to the lateral surface.

9. The intelligent screw nut according to one of the preceding claims, **characterised in that** the RFID transponder comprises an analog-to-digital converter and an amplifier.

10. The intelligent screw nut according to one of the preceding claims, **characterised in that** the RFID transponder is a passive RFID transponder.

11. The intelligent screw nut according to one of the preceding claims, **characterised in that** the screw nut (1) additionally comprises a temperature sensor.

12. The intelligent screw nut according to claim 11, **characterised in that** the temperature sensor is designed to measure the temperature of the screw nut.

13. The intelligent screw nut according to one of claims 2 to 12, **characterised in that** the RFID transponder (5) or the micro-controller (5) is designed to wirelessly transmit measurement signals of the sensors to a receiver.

## Revendications

1. Ecrou intelligent (1), ledit écrou (1) étant équipé de capteurs (2) et (3) sur les surfaces latérales (8) dudit écrou (1),
des jauges de déformation (2) et (3) étant prévues en tant que capteurs, qui sont conçues pour mesurer l'écrasement de l'écrou (1) et qui sont fixées sur les surfaces latérales (8) de l'écrou (1).

2. Ecrou intelligent (1) selon la revendication 1, **caractérisé en ce que** l'écrou est équipé d'un transpondeur RFID (5) ou d'un microcontrôleur (5).

3. Ecrou intelligent (1) selon l'une des revendications précédentes, **caractérisé en ce que** les capteurs fixés sont orientés dans l'axe de la vis (4) et/ou transversalement à l'axe de la vis (4).

4. Ecrou intelligent (1) selon l'une des revendications précédentes, **caractérisé en ce que** le transpondeur RFID (5) ou le microcontrôleur (5) est relié aux capteurs par un câble de capteur.

5. Ecrou intelligent (1) selon l'une des revendications précédentes, **caractérisé en ce que** le transpondeur RFID (5) ou le microcontrôleur (5) est fixé à l'une quelconque et/ou à plusieurs des surfaces latérales de l'écrou intelligent.

6. Ecrou intelligent (1) selon l'une des revendications précédentes, **caractérisé en ce que** les signaux de mesure du capteur sont transmis d'une face latérale à une quelconque autre face latérale de l'écrou à l'aide de câbles de capteur.

7. Ecrou intelligent (1) selon l'une des revendications précédentes, **caractérisé en ce que** les signaux de mesure du capteur sont transmis d'une face latérale à une quelconque autre face latérale de l'écrou au moyen d'une technologie radio.

8. Ecrou intelligent (1) selon l'une des revendications précédentes, **caractérisé en ce que** les capteurs (2) et (3) sont collés ou soudés à la surface latérale.

9. Ecrou intelligent selon l'une des revendications précédentes, **caractérisé en ce que** le transpondeur RFID comprend un convertisseur analogique-numérique et un amplificateur.

10. Ecrou intelligent selon l'une des revendications précédentes, **caractérisé en ce que** le transpondeur RFID est un transpondeur RFID passif.

11. Ecrou intelligent selon l'une des revendications précédentes, **caractérisé en ce que** l'écrou (1) comprend en outre un capteur de température.

12. Ecrou intelligent selon la revendication 11, **caractérisé en ce que** le capteur de température est conçu pour mesurer la température de l'écrou.

13. Ecrou intelligent selon l'une des revendications 2 à 12, **caractérisé en ce que** le transpondeur RFID (5) ou le microcontrôleur (5) est conçu pour transmettre sans fil des signaux de mesure des capteurs à un dispositif récepteur.
